# EUROPEAN PATENT APPLICATION

(11) **EP 4 253 470 A1**
(43) Date of publication of application: **04.10.2023**
(21) Application number: 21898044.9
(22) Date of filing: 25.11.2021
(51) Int. Cl.: C08L 23/02, C08K 5/06, C08K 5/101, C08K 5/20

(54) **CRYSTALLIZATION INHIBITOR FOR POLYOLEFIN RESIN, POLYOLEFIN RESIN COMPOSITION, MOLDED ARTICLE, METHOD FOR PRODUCING POLYOLEFIN RESIN COMPOSITION, AND METHOD FOR INHIBITING CRYSTALLIZATION OF POLYOLEFIN RESIN**

(30) Priority: 25.11.2020 JP 2020195480
(71) Applicant: ADEKA CORPORATION, Arakawa-ku Tokyo 116-8554 (JP)
(72) Inventor: TADA Atsuo, Saitama-shi, Saitama 336-0022 (JP); UEDA Naoto, Saitama-shi, Saitama 336-0022 (JP)
(74) Representative: Gill Jennings & Every LLP
(86) International application number: PCT/JP2021/043251
(87) International publication number: WO 2022/114072

(57) **Abstract**

Provided are a crystallization inhibitor for polyolefin resins, a polyolefin resin composition, a molded article, a method of producing a polyolefin resin composition, and a method of inhibiting the crystallization of polyolefin resins, which are capable of sufficiently inhibiting the crystallization of polyolefin resins. The crystallization inhibitor for polyolefin resins includes a nucleating agent for polyolefin resins (A) and a lubricant (B). The nucleating agent for polyolefin resins (A) includes an acetal compound (A-1) represented by general formula (1), and the lubricant (B) includes at least one selected from the group consisting of a fatty acid ester (B-1) and a fatty acid amide (B-2). 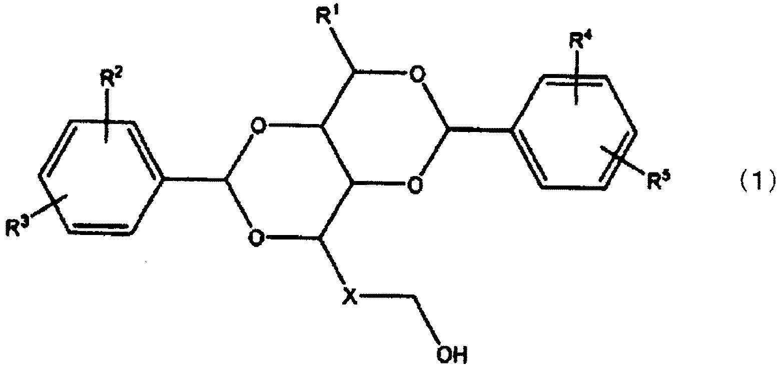 In general formula (1), R¹ represents a hydrogen atom, etc.; R², R³, R⁴, and R⁵ each independently represent a hydrogen atom, etc., or a C₃-C₆ alkylene group, etc. with R² and R³ or R⁴ and R⁵ linked to each other; and X represents a single bond, a -CH(OH)- group, or a - CH(OH)CH(OH)- group.

## Description

### TECHNICAL FIELD

The present invention relates to a crystallization inhibitor for polyolefin resins, a polyolefin resin composition, a molded article, a method of producing a polyolefin resin composition, and a method of inhibiting crystallization of polyolefin resins, and particularly to a crystallization inhibitor for polyolefin resins, a polyolefin resin composition, a molded article, a method of producing a polyolefin resin composition, and a method of inhibiting crystallization of polyolefin resins, which are capable of sufficiently inhibiting crystallization of polyolefin resins.

### BACKGROUND ART

It has been desired that the crystallization of polyolefin resins be sufficiently inhibited in the manufacture of synthetic fibers or films by processing resin materials containing polyolefin resins, or in the manufacture of laminates by laminating such resin materials to substrates made of wood, fibrous materials, or the like.

As a method of inhibiting the crystallization of polyolefin resins, for example, Patent Document 1 proposes a method in which silicone oil is added.

### RELATED ART DOCUMENT

### PATENT DOCUMENT

[Patent Document 1] JP H09-176407A

### SUMMARY OF THE INVENTION

### PROBLEMS TO BE SOLVED BY THE INVENTION

However, there have been cases where the method described in Patent Document 1 fails to sufficiently inhibit the crystallization of polyolefin resins.

Accordingly, an object of the present invention is to provide a crystallization inhibitor for polyolefin resins, a polyolefin resin composition, a molded article, a method of producing a polyolefin resin composition, and a method of inhibiting crystallization of polyolefin resins, which is capable of sufficiently inhibiting the crystallization of polyolefin resins.

### MEANS FOR SOLVING THE PROBLEMS

In order to solve the above problem, the present inventors have intensively studied and surprisingly found that a crystallization inhibitor for polyolefin resins containing a nucleating agent for polyolefin resins and a lubricant can solve the above problem, thereby completing the present invention.

Thus, the crystallization inhibitor for polyolefin resins of the present invention contains a nucleating agent for polyolefin resins (A) and a lubricant (B).

It is preferred in the crystallization inhibitor for polyolefin resins of the present invention that the nucleating agent for polyolefin resins (A) contains an acetal compound (A-1) represented by general formula (1), and that the lubricant (B) contains at least one selected from the group consisting of a fatty acid ester (B-1) and a fatty acid amide (B-2). 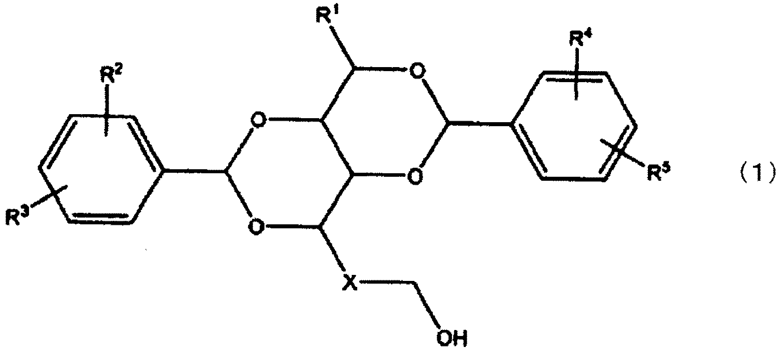 where R¹ represents a hydrogen atom or a C₁-C₄ alkyl group; R², R³, R⁴, and R⁵ each independently represent a hydrogen atom, a halogen atom, a cyano group, a C₁-C₄ alkyl group, or a C₁-C₄ alkoxy group, or a C₃-C₆ alkylene group or a C₁-C₄ alkylenedioxy group when R² and R³ or R⁴ and R⁵ are linked to each other; and X represents a single bond, a - CH(OH)- group, or a -CH(OH)CH(OH)- group.

It is also preferred in the crystallization inhibitor for polyolefin resins of the present invention that the fatty acid ester (B-1) contains a glycerol fatty acid monoester, and that the fatty acid amide (B-2) contains at least one selected from the group consisting of a fatty acid monoamide and an alkylene bisfatty acid amide.

The present invention also provides a polyolefin resin composition containing a polyolefin resin, a nucleating agent for polyolefin resins (A), and a lubricant (B), wherein the content of the polyolefin resin with respect to 100 parts by mass nucleating agent for polyolefin resins (A) is from 0.005 parts by mass to 0.1 parts by mass.

It is preferred in the polyolefin resin composition of the present invention that the nucleating agent for polyolefin resins (A) contains an acetal compound (A-1) represented by general formula (1), and that the lubricant (B) contains at least one selected from the group consisting of a fatty acid ester (B-1) and a fatty acid amide (B-2). 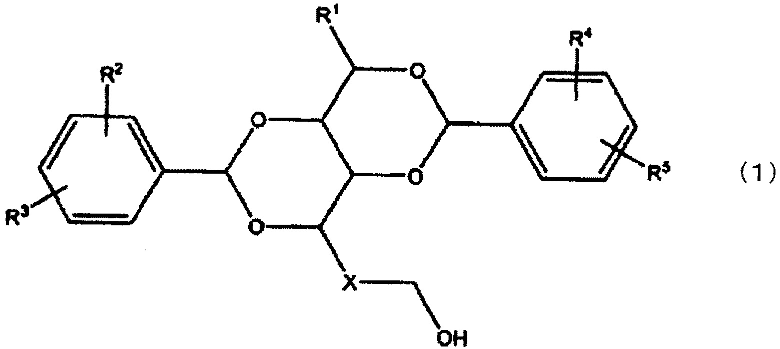 where R¹ represents a hydrogen atom or a C₁-C₄ alkyl group; R², R³, R⁴, and R⁵ each independently represent a hydrogen atom, a halogen atom, a cyano group, a C₁-C₄ alkyl group, or a C₁-C₄ alkoxy group, or a C₃-C₆ alkylene group or a C₁-C₄ alkylenedioxy group when R² and R³ or R⁴ and R⁵ are linked to each other; and X represents a single bond, a - CH(OH)- group, or a -CH(OH)CH(OH)- group.

The present invention also provides a molded article obtained by molding the polyolefin resin composition.

The present invention also provides a method of producing a polyolefin resin composition, containing a blending step of blending a nucleating agent for polyolefin resins (A) and a lubricant (B) with a polyolefin resin, wherein, in the blending step, the content of the polyolefin resin with respect to 100 parts by mass of the nucleating agent for polyolefin resins (A) is from 0.005 parts by mass to 0.1 parts by mass.

The present invention also provides a method of inhibiting crystallization of polyolefin resins by blending a nucleating agent for polyolefin resins (A) and a lubricant (B) with a polyolefin resin.

### EFFECT OF THE INVENTION

According to the present invention, a crystallization inhibitor for polyolefin resins, a polyolefin resin composition, a molded article, a method of producing a polyolefin resin composition, and a method of inhibiting the crystallization of polyolefin resins, which are capable of sufficiently inhibiting the crystallization of polyolefin resins can be provided.

### BRIEF DESCRIPTION OF THE DRAWING

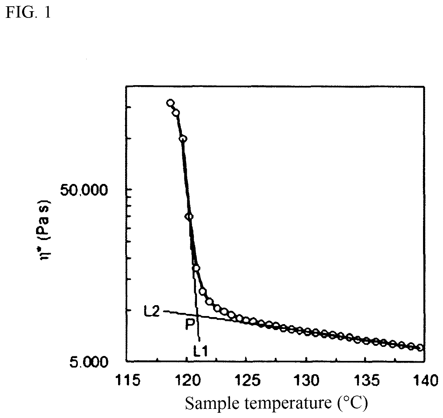

FIG. 1 represents a graph showing the complex viscosity η^{∗} (Pa s) obtained in the dynamic viscoelasticity analysis on resin composition of Example 1, which is plotted with respect to the sample temperature (°C).

### MODE FOR CARRYING OUT THE INVENTION

Embodiments of the present invention will be described in detail below. First, the crystallization inhibitor for polyolefin resins of the present embodiment will be described.

### <Crystallization inhibitor for polyolefin resins>

The crystallization inhibitor for polyolefin resins of the present embodiment contains a nucleating agent for polyolefin resins (A) and a lubricant (B).

The crystallization inhibitor for polyolefin resins of the present embodiment can sufficiently inhibit the crystallization of polyolefin resins.

In the present embodiment, the nucleating agent for polyolefin resins (A) may be, for example, a melt-diffusion nucleating agent. As used herein, the melt-diffusion nucleating agent refers to a nucleating agent that melts or dissolves in a polyolefin resin under the temperature during the process for molding polyolefin resins; diffuses in the resin matrix; crystallizes before the resin matrix starts to crystallize during the cooling step of the molding process; and acts as fine solids.

Examples of the melt-diffusion nucleating agent include acetal compounds (A-1) represented by general formula (1), and amide compounds (A-2) represented by general formula (2).

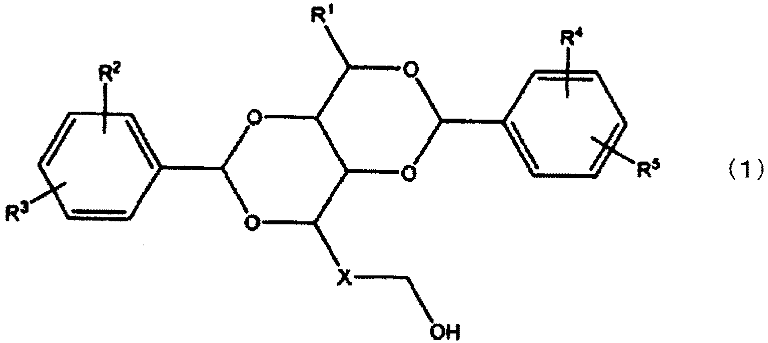

In general formula (1), R¹ represents a hydrogen atom or a C₁-C₆, preferably C₁-C₄ alkyl group; R², R³, R⁴, and R⁵ each independently represent a hydrogen atom, a halogen atom, a cyano group, a C₁-C₆, preferably C₁-C₄ alkyl group, or a C₁-C₆, preferably C₁-C₄ alkoxy group, or a C₃-C₆ alkylene group or a C₁-C₆, preferably C₁-C₄ alkylenedioxy group when R² and R³ or R⁴ and R⁵ are linked to each other; and X represents a single bond, a - CH(OH)- group, or a -CH(OH)CH(OH)- group.

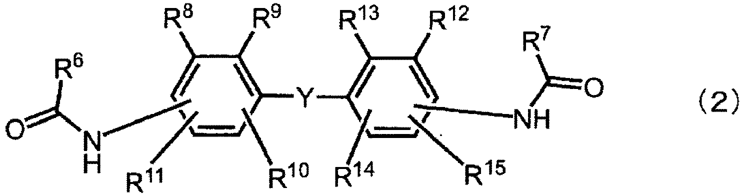

In general formula (2), R⁶ and R⁷ each independently represent a C₁-C₆ alkyl group; R⁸ to R¹⁵ each independently represent a hydrogen atom, a halogen atom, a cyano group, a C₁-C₆ alkyl group, or a C₁-C₆ alkoxy group; and Y represents a single bond or a C₁-C₄ alkanediyl group.

In the acetal compounds (A-1) represented by general formula (1), the C₁-C₆ alkyl group in R¹ to R⁵ may be, for example, a methyl group, an ethyl group, an n-propyl group, an isopropyl group, an n-butyl group, an isobutyl group, a sec-butyl group, a tert-butyl group, an n-pentyl group, an isopentyl group, an n-hexyl group, or an isohexyl group.

In the acetal compounds (A-1) represented by general formula (1), the C₁-C₆ alkoxy group in R² to R⁵ may be, for example, a methoxy group, an ethoxy group, an n-propoxy group, an isopropoxy group, an n-butyloxy group, an isobutyloxy group, a sec-butyloxy group, a tert-butyloxy group, an n-pentyloxy group, an isopentyloxy group, an n-hexyloxy group, or an isohexyloxy group.

In the acetal compounds (A-1) represented by general formula (1), the C₃-C₆ alkylene group in the case where R² and R³ or R⁴ and R⁵ are linked to each other may be, for example, a propylene group, a butylene group, a pentylene group, or a hexylene group.

In the acetal compounds (A-1) represented by general formula (1), the C₁-C₆ alkylenedioxy group in the case where R² and R³ or R⁴ and R⁵ are linked to each other may be, for example, a methylenedioxy group, an ethylenedioxy group, a propylenedioxy group, a butylenedioxy group, a pentylenedioxy group, or a hexylenedioxy group.

In the acetal compounds (A-1) represented by general formula (1), the halogen atom in R² to R⁵ may be a fluorine atom, a chlorine atom, a bromine atom, or an iodine atom.

Among the acetal compounds (A-1) represented by general formula (1), preferred are those in which R¹, R², R³, R⁴, and R⁵ each independently is a hydrogen atom or a C₁-C₆, preferably C₁-C₄ alkyl group, and X is a -CH(OH)- group.

Among the acetal compounds (A-1) represented by general formula (1), those represented by general formula (1') are preferred from the viewpoint of further sufficiently inhibit the crystallization of polyolefin resins.

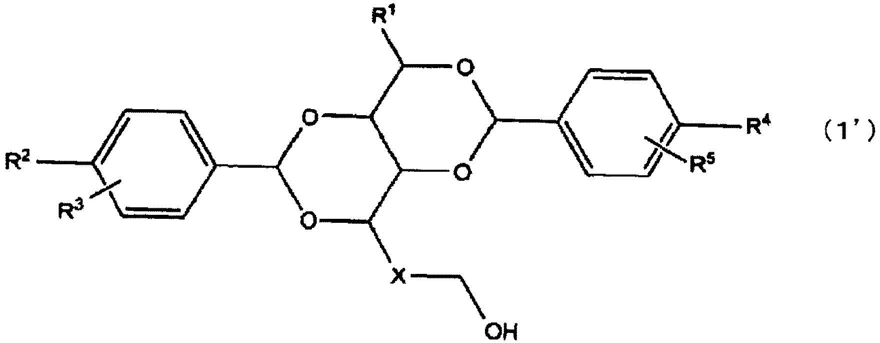

Here, in general formula (1'), R¹ to R⁵ represents the same as those in general formula (1). Among the compounds represented by general formula (1'), preferred are those in which R² and R⁴ each independently are a C₁-C₆, preferably C₁-C₄ alkyl group, and further preferred are those in which R¹, R³, and R⁵ each independently are a hydrogen atom or a C₁-C₆, preferably C₁-C₄ alkyl group, R² and R⁴ each independently are a C₁-C₆, preferably C₁-C₄ alkyl group, and X is a -CH(OH)- group.

Specific examples of the acetal compounds (A-1) represented by general formula (1) include Compounds Nos. 1 to 4 described below. From the viewpoint of further sufficiently inhibiting the crystallization of polyolefin resins, the acetal compounds (A-1) represented by general formula (1) preferably include at least one selected from the group consisting of Compound No. 1, Compound No. 2, Compound No. 3, and Compound No. 4, more preferably include at least one selected from the group consisting of Compound No. 1, Compound No. 2, and Compound No. 3, still more preferably include at least one selected from the group consisting of Compound No. 1 and Compound No. 2, and still more preferably include Compound No. 2.

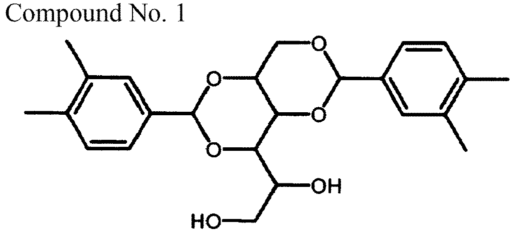

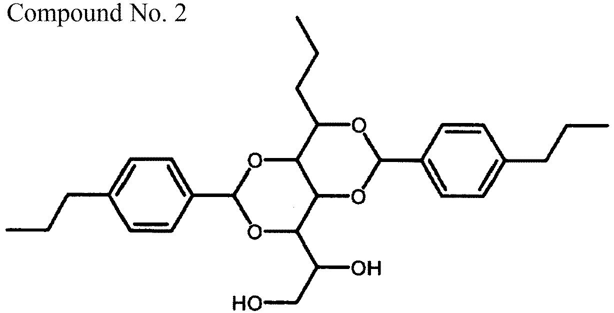

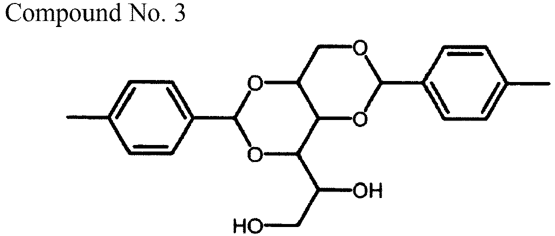

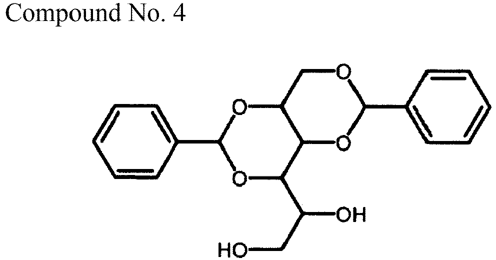

Examples of the method of producing the acetal compounds (A-1) represented by general formula (1) include a method in which an alditol compound such as sorbitol and aryl aldehyde are dehydrated in the presence of an acid catalyst.

In the amide compounds (A-2) represented by general formula (2), the C₁-C₆ alkyl group in R⁶ to R¹⁵ may be, for example, a methyl group, an ethyl group, an n-propyl group, an isopropyl group, an n-butyl group, an isobutyl group, a sec-butyl group, a tert-butyl group, an n-pentyl group, an isopentyl group, an n-hexyl group, or an isohexyl group.

In the amide compounds (A-2) represented by general formula (2), the halogen atom in R⁸ to R¹⁵ may be, for example, a fluorine atom, a chlorine atom, a bromine atom, or an iodine atom.

In the amide compounds (A-2) represented by general formula (2), the C₁-C₆ alkoxy group in R⁸ to R¹⁵ may be, for example, a methoxy group, an ethoxy group, an n-propoxy group, an isopropoxy group, an n-butyloxy group, an isobutyloxy group, a sec-butyloxy group, a tert-butyloxy group, an n-pentyloxy group, an isopentyloxy group, an n-hexyloxy group, or an isohexyloxy group.

In the amide compounds (A-2) represented by general formula (2), the C₁-C₄ alkanediyl group in Y may be, for example, an alkylene group, such as a methylene group, an ethane-1,2-diyl group, a propane-1,3-diyl group, or a butane-1,4-diyl group, an ethane-1,1-diyl group, or a propane-2,2-diyl group.

Among the amide compounds (A-2) represented by general formula (2), preferred are those in which R⁶ and R⁷ each independently is a C₁-C₆ alkyl group, R⁸ to R¹⁵ each independently is a hydrogen atom or a C₁-C₆ alkyl group, and Y is a C₁-C₄ alkanediyl group.

Specific examples of the amide compounds (A-2) represented by general formula (2) include Compounds Nos. 5 to 8 described below. Among them, Compound No.5, Compound No.6, Compound No.8 are preferable, and Compound No.5 and Compound No.8 are more preferable.

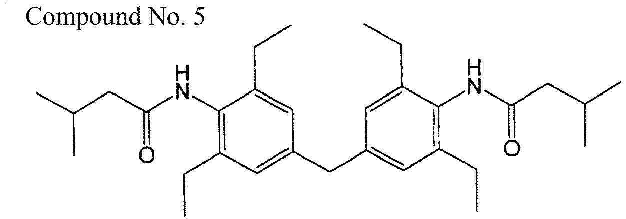

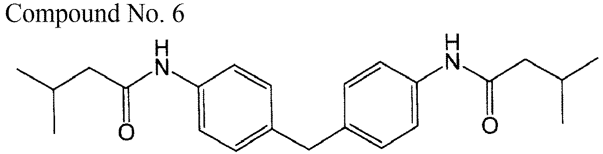

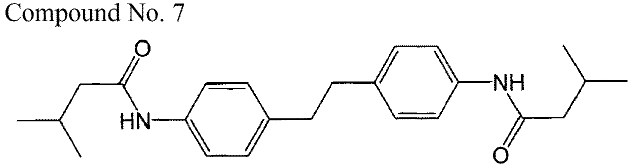

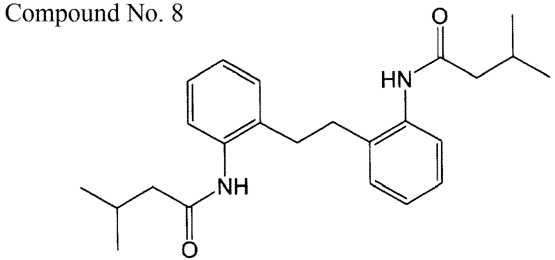

Examples of the method of producing the amide compounds (A-2) represented by general formula (2) include a method in which a diamine compound and carboxylic acid chloride are allowed to react in the presence of a base such as triethylamine.

In the present embodiment, the nucleating agent for polyolefin resins (A) may be a dispersible nucleating agent. As used herein, the dispersible nucleating agent refers to a nucleating agent that is in solid state under the temperature during the process for molding polyolefin resins; and is not dissolved in polyolefin resins; and acts as fine solids dispersed in the resin matrix during melt kneading.

Examples of the dispersible nucleating agent include aromatic phosphate metal salts (A-3) represented by general formula (3).

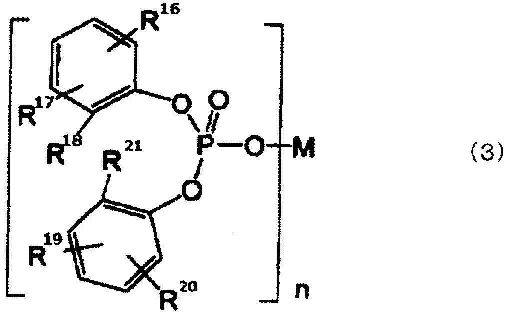

In general formula (3), R¹⁶ to R²¹ each independently represents a hydrogen atom or a C₁-C₆ alkyl group; n represents 1 or 2; when n is 1, M represents an alkali metal or dihydroxy aluminum; and when n is 2, M represents an alkaline earth metal, zinc, or hydroxyaluminum. R¹⁸ and R²¹ may be linked together to form a methylene group or an ethylene group.

In the aromatic phosphate metal salts (A-3) represented by general formula (3), the C₁-C₆ alkyl group in R¹⁶ to R²¹ may be, for example, a methyl group, an ethyl group, an n-propyl group, an isopropyl group, an n-butyl group, an isobutyl group, a sec-butyl group, a tert-butyl group, an n-pentyl group, an isopentyl group, an n-hexyl group, or an isohexyl group.

In the aromatic phosphate metal salts (A-3) represented by general formula (3), the alkali metal in M may be, for example, lithium, sodium, or potassium. The alkaline earth metal in M may be, for example, magnesium, calcium, or barium.

Among the aromatic phosphate metal salts (A-3) represented by general formula (3), preferred are those in which R¹⁶ to R²¹ each independently is a hydrogen atom or a C₁-C₆ alkyl group, and n is 1, and M is sodium.

Specific examples of the aromatic phosphate metal salts (A-3) represented by general formula (3) include Compounds Nos. 9 to 12 described below. Among them, Compound No. 11 and Compound No. 12 are preferable, and Compound No. 11 is more preferable.

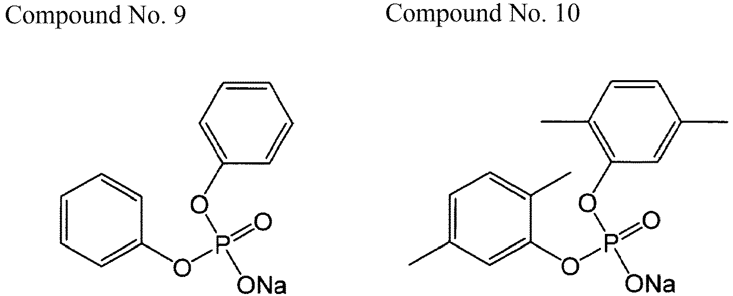

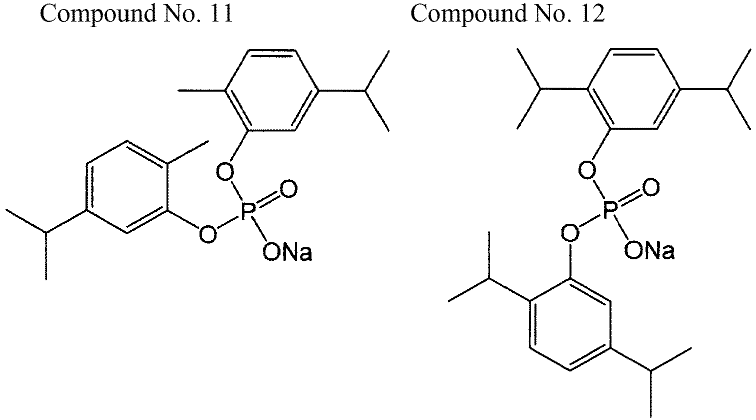

Methods of producing the aromatic phosphate metal salts (A-3) represented by general formula (3) include, for example, a method in which phosphorus chloride and a phenolic compound are allowed to react, followed by reaction with metal hydroxide such as sodium hydroxide.

In the crystallization inhibitor for polyolefin resins of the present embodiment, the nucleating agent for polyolefin resins (A) preferably includes at least one selected from the group consisting of the acetal compounds (A-1) represented by general formula (1), the amide compounds (A-2) represented by general formula (2), and the aromatic phosphate metal salts (A-3) represented by general formula (3), and more preferably includes at least one selected from the group consisting of the acetal compounds (A-1) represented by general formula (1) and the amide compounds (A-2) represented by general formula (2), from the viewpoint of further sufficiently inhibit the crystallization of polyolefin resins. The nucleating agent for polyolefin resins (A) may include an aromatic phosphate metal salt (A-3) represented by general formula (3).

In the present embodiment, the lubricant (B) may be, for example, a fatty acid, such as a fatty acid ester (B-1), a fatty acid amide (B-2), or stearic acid; a higher alcohol, such as stearyl alcohol; mannitol; or a hydrogenated castor oil. In the crystallization inhibitor for polyolefin resins of the present embodiment, the lubricant (B) preferably includes at least one selected from the group consisting of the fatty acid esters (B-1) and the fatty acid amides (B-2) from the viewpoint of further sufficiently inhibit the crystallization of polyolefin resins. The lubricant (B) may include a fatty acid ester (B-1) and not a fatty acid amide (B-2). Alternatively, the lubricant (B) may include a fatty acid amide (B-2) and not a fatty acid ester (B-1). Further alternatively, the lubricant (B) may include a fatty acid ester (B-1) and a fatty acid amide (B-2).

Examples of the fatty acid ester (B-1) include fatty acid alkyl esters, such as fatty acid methyl and fatty acid ethyl; alkylene glycol fatty acid monoesters, such as ethylene glycol fatty acid monoesters and propylene glycol fatty acid monoesters; alkylene glycol fatty acid diesters, such as ethylene glycol fatty acid diesters and propylene glycol fatty acid diesters; glycerol fatty acid esters, such as glycerol fatty acid monoesters, glycerol fatty acid diesters, and glycerol fatty acid triesters; and pentaerythritol fatty acid esters, such as pentaerythritol fatty acid monoesters, pentaerythritol fatty acid diesters, pentaerythritol fatty acid triesters, and pentaerythritol fatty acid tetraesters.

The fatty acid residue constituting the fatty acid ester (B-1) preferably has a number of carbon atoms, for example, of 7 to 29. As used herein, the fatty acid residue indicates a group obtained by removing a carboxyl group from a fatty acid. The number of carbon atoms in the fatty acid residue is preferably from 11 to 23, and more preferably from 13 to 21. Examples of the fatty acid residue include a group obtained by removing a carboxyl group from a fatty acid, such as lauric acid, myristic acid, palmitic acid, stearic acid, oleic acid, linoleic acid, linolenic acid, arachidic acid, arachidonic acid, behenic acid, lignoceric acid, cerotinic acid, montanoic acid, melissic acid, 12-hydroxystearic acid, or ricinoleic acid. Among them, the groups obtained by removing a carboxyl group from lauric acid, myristic acid, palmitic acid, and stearic acid are preferable, and the group obtained by removing a carboxyl group from stearic acid is particularly preferable.

In the crystallization inhibitor for polyolefin resins of the present embodiment, the fatty acid esters (B-1) preferably contain a glycerol fatty acid monoester. Examples of the glycerol fatty acid monoester include glycerol monolaurate, glycerol monomyristate, glycerol monopalmitate, glycerol monostearate, glycerol monooleate, glycerol monolinoleate, glycerol monolinolenate, glycerol monoarachidate, glycerol monoarachidonate, glycerol monobehenate, glycerol monolignocerate, glycerol monocerotinate, glycerol monomontanate, glycerol monomelissinate, glycerol mono-12-hydroxystearate, and glycerol monoricinoleate. Among them, glycerol monolaurate, glycerol monomyristate, glycerol palmitate monoester, and glycerol monostearate are preferable, and glycerol monostearate is particularly preferable.

Examples of the fatty acid amide (B-2) include fatty acid monoamides; alkylene bisfatty acid amides, such as methylene bisfatty acid amides and ethylene bisfatty acid amides; alkylol fatty acid amides, such as methylol fatty acid amide and ethylol fatty acid amide; and N-alkyl fatty acid amide.

The fatty acid residue constituting the fatty acid amide (B-2) may be the same as those illustrated as the fatty acid residue constituting the fatty acid ester (B-1).

In the crystallization inhibitor for polyolefin resins of the present embodiment, the fatty acid amides (B-2) preferably include at least one selected from the group consisting of fatty acid monoamides and alkylene bisfatty acid amides. The fatty acid amides (B-2) may include a fatty acid monoamide and not an alkylene bisfatty acid amide. Alternatively, the fatty acid amides (B-2) may include an alkylene bisfatty acid amide and not a fatty acid monoamide. Further alternatively, the fatty acid amides (B-2) may include a fatty acid monoamide and an alkylene bisfatty acid amide.

Specific examples of the fatty acid monoamide include lauric acid amide, myristic acid amide, palmitic acid amide, stearic acid amide, oleic acid amide, linoleic acid amide, linolenic acid amide, erucic acid amide, arachidic acid amide, arachidonic acid amide, behenic acid amide, lignoceric acid amide, cerotinic acid amide, montanic acid amide, melissic acid amide, 12-hydroxystearic acid amide, and ricinoleic acid amide. Among them, lauric acid amide, myristic acid amide, palmitic acid amide, stearic acid amide, oleic acid amide, and erucic acid amide are preferable, stearic acid amide, oleic acid amide, and erucic acid amide are more preferable, oleic acid amide and erucic acid amide are still more preferable, and oleic acid amide is still more preferable.

Specific examples of the alkylene bisfatty acid amide include methylenebis(lauric acid amide), methylenebis(myristic acid amide), methylenebis(palmitic acid amide), methylenebis(stearic acid amide), methylenebis(oleic acid amide), methylenebis(linoleic acid amide), methylenebis(linolenic acid amide), methylenebis(arachidic acid amide), methylenebis(arachidonic acid amide), methylenebis(behenic acid amide), methylenebis(lignoceric acid amide), methylenebis(cerotinic acid amide), methylenebis(montanic acid amide), methylenebis(melissic acid amide), methylenebis(12-hydroxystearic acid amide), methylenebis(ricinoleic acid amide), ethylenebis(lauric acid amide), ethylenebis(myristic acid amide), ethylenebis(palmitic acid amide), ethylenebis(stearic acid amide), ethylenebis(oleic acid amide), ethylenebis(linoleic acid amide), ethylenebis(linolenic acid amide), ethylenebis(arachidic acid amide), ethylenebis(arachidonic acid amide), ethylenebis(behenic acid amide), ethylenebis(lignoceric acid amide), ethylenebis(cerotinic acid amide), ethylenebis(montanic acid amide), ethylenebis(melissic acid amide), ethylenebis(12-hydroxystearic acid amide), and ethylenebis(ricinoleic acid amide). Among them, methylenebis(lauric acid amide), methylenebis(myristic acid amide), methylenebis(palmitic acid amide), methylenebis(stearic acid amide), ethylenebis(lauric acid amide), ethylenebis(myristic acid amide), ethylenebis(palmitic acid amide), and ethylenebis(stearic acid amide) are preferable, methylenebis(stearic acid amide) and ethylenebis(stearic acid amide) are more preferable, and ethylenebis(stearic acid amide) is particularly preferable.

The amount of the lubricant (B) contained with respect to 100 parts by mass of the nucleating agent for polyolefin resins (A) may be, for example, 10 to 1000 parts by mass. The amount of the lubricant (B) contained with respect to 100 parts by mass of the nucleating agent compound for polyolefin resins (A) is preferably from 15 to 600 parts by mass, more preferably from 25 to 400 parts by mass, still more preferably from 30 to 300 parts by mass, and still more preferably from 50 to 300 parts by mass.

In the crystallization inhibitor for polyolefin resins of the present embodiment, the nucleating agent for polyolefin resins (A) may include an acetal compound (A-1) represented by general formula (1), and the lubricant (B) may include at least one selected from the group consisting of a fatty acid ester (B-1) and a fatty acid amide (B-2).

The crystallization inhibitor for polyolefin resins of the present embodiment may further include one or two or more of additives (hereinafter referred to as "other additives"), such as phenolic antioxidants, phosphorus-based antioxidants, sulfur-based antioxidants, and other antioxidants, hindered amine compounds, ultraviolet absorbers, fatty acid metal salts, flame retardants, flame retardant promoters, fillers, hydrotalcites, antistatic agents, fluorescent whitening agents, pigments, and dyes.

Examples of the phenolic antioxidants include 2,6-di-tert-butyl-4-ethylphenol, 2-tert-butyl-4,6-dimethylphenol, styrenated phenol, 2,2'-methylenebis(4-ethyl-6-tert-butylphenol), 2,2'-thiobis-(6-tert-butyl-4-methylphenol), 2,2'-thiodiethylenebis[3-(3,5-di-tert-butyl-4-hydroxyphenyl)propionate], 2-methyl-4,6-bis(octylsulfanilmethyl)phenol, 2,2'-isobutylidenebis(4,6-dimethylphenol), isooctyl-3-(3,5-di-tert-butyl-4-hydroxyphenyl)propionate, N,N'-hexane-1,6-diylbis[3-(3,5-di-tert-butyl-4-hydroxyphenyl)propionamide], 2,2'-oxamide-bis[ethyl-3-(3,5-di-tert-butyl-4-hydroxyphenyl)propionate], 2-ethylhexyl-3-(3',5'-di-tert-butyl-4'-hydroxyphenyl)propionate, 2,2'-ethylenebis(4,6-di-tert-butylphenol), esters of 3,5-di-tert-butyl-4-hydroxybenzenepropanoic acid and C₁₃₋₁₅ alkyl, 2,5-di-tert-amylhydroquinone, hindered phenol polymers (ADEKA POLYMER ADDITIVES EUROPE SAS, trade name "AO.OH.98"), 2,2'-methylenebis[6-(1-methylcyclohexyl)-p-cresol], 2-tert-butyl-6-(3-tert-butyl-2-hydroxy-5-methylbenzyl)-4-methylphenylacrylate, 2-[1-(2-hydroxy-3,5-di-tert-pentylphenyl)ethyl]-4,6-di-tert-pentylphenylacrylate, 6-[3-(3-tert-butyl-4-hydroxy-5-methyl)propoxy]-2,4,8,10-tetra-tert-butylbenz[d,f][1,3,2]-dioxaphosphobin, hexamethylenebis[3-(3,5-di-tert-butyl-4-hydroxyphenyl)propionate], a bis[monoethyl(3,5-di-tert-butyl-4-hydroxybenzyl)phosphonate]calcium salt, a reaction product between 5,7-bis(1,1-dimethylethyl)-3-hydroxy-2(3H)-benzofuranone and o-xylene, 2,6-di-tert-butyl-4-(4,6-bis(octylthio)-1,3,5-triazine-2-ylamino)phenol, DL-α-tocopherol (vitamin E), 2,6-bis(α-methylbenzyl)-4-methylphenol, bis[3,3-bis-(4'-hydroxy-3'-tert-butyl-phenyl)butanoic acid]glycol ester, 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-tert-butyl-4-hydroxybenzylthioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butyric acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acryloyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-tetraoxaspiro[5.5]undecane, triethylene glycol bis[β-(3-tert-butyl-4-hydroxy-5-methylphenyl)propionate], 3-(3,5-dialkyl-4-hydroxyphenyl)propionate derivatives, such as stearyl-3-(3,5-di-tert-butyl-4-hydroxyphenyl)propionamide, palmityl-3-(3,5-di-tert-butyl-4-hydroxyphenyl)propionamide, myristyl-3-(3,5-di-tert-butyl-4-hydroxyphenyl)propionamide, lauryl-3-(3,5-di-tert-butyl-4-hydroxyphenyl)propionamide.

Examples of the phosphorus-based antioxidants include triphenyl phosphite, diisooctyl phosphite, heptakis(dipropyleneglycol) triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropyleneglycol) phosphite, dioleyl hydrogen phosphite, trilauryl trithiophosphite, bis(tridecyl) phosphite, tris(isodecyl) phosphite, tris(tridecyl) phosphite, diphenyl decyl phosphite, dinonyl phenyl bis(nonylphenyl) phosphite, poly(dipropyleneglycol) phenyl phosphite, tetraphenyl dipropyleneglycol diphosphite, tris(nonylphenyl) phosphite, tris(2,4-di-tert-butylphenyl) phosphite, tris(2,4-di-tert-butyl-5-methylphenyl) phosphite, tris[2-tert-butyl-4-(3-tert-butyl-4-hydroxy-5-methylphenylthio)-5-methylphenyl] phosphite, tri(decyl) phosphite, octyl diphenyl phosphite, di(decyl) monophenyl phosphite, a mixture of distearyl pentaerythritol and calcium stearate salt, alkyl (C10) bisphenol A phosphite, tetraphenyl-tetra(tridecyl) pentaerythritol tetraphosphite, bis(2,4-di-tert-butyl-6-methylphenyl) ethyl phosphite, tetra(tridecyl) isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, (1-methyl-1-propenyl -3-ylidene)tris(1,1-dimethylethyl)-5-methyl-4,1-phenylene)hexatridecyl phosphite, 2,2'-methylenebis(4,6-di-tert-butylphenyl)-2-ethylhexyl phosphite, 2,2'-methylenebis(4,6-di-tert-butylphenyl)-octadecyl phosphite, 2,2'-ethylidenebis(4,6-di-tert-butylphenyl) fluorophosphite, 4,4'-butylidenebis(3-methyl-6-tert-butylphenylditridecyl) phosphite, tris(2-[(2,4,8,10-tetrakis-tert-butyldibenzo[d,f][1,3,2]dioxaphosphepin-6-yl)oxy]ethyl)amine, 3,9-bis(4-nonylphenoxy)-2,4,8,10-tetraoxa-3,9-diphosphesspiro[5,5]undecane, 2,4,6-tri-tert-butylphenyl-2-butyl-2-ethyl-1,3-propanediolphosphite, poly-4,4'-isopropylidenediphenol C₁₂₋is alcohol phosphite, bis(diisodecyl) pentaerythritol diphosphite, bis(tridecyl) pentaerythritol diphosphite, bis(octadecyl) pentaerythritol diphosphite, bis(nonylphenyl) pentaerythritol diphosphite, bis(2,4-di-tert-butylphenyl) pentaerythritol diphosphite, bis(2,4,6-tri-tert-butylphenyl) pentaerythritol diphosphite, bis(2,6-di-tert-butyl-4-methylphenyl) pentaerythritol diphosphite, and bis(2,4-dicumylphenyl) pentaerythritol diphosphite.

Examples of the sulfur-based antioxidant include tetrakis[methylene-3-(laurylthio)propionate]methane, bis(methyl-4-[3-n-alkyl(C12/C14)thiopropionyloxy]5-tert-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, auryl/stearylthiodipropionate, 4,4'-thiobis(6-tert-butyl-m-cresol), 2,2'-thiobis(6-tert-butyl-p-cresol), and distearyl-disulfide.

Examples of the other antioxidants include nitrone compounds, such as N-benzyl-α-phenylnitrone, N-ethyl-α-methylnitrone, N-octyl-α-heptylnitrone, N-lauryl-α-undecylnitrone, N-tetradecyl-α-tridecylnitrone, N-hexadecyl-α-pentadecylnitrone, N-octyl-α-heptadecylnitrone, N-hexadecyl-α-heptadecylnitrone, N-octadecyl-α-pentadecylnitrone, N-heptadecyl-α-heptadecylnitrone, and N-octadecyl-α-heptadecylnitrone; and benzofuran compounds, such as 3-arylbenzofuran-2(3H)-one, 3-(alkoxyphenyl)benzofuran-2-one, 3-(acyloxyphenyl)benzofuran-2(3H)-one, 5,7-di-tert-butyl-3-(3,4-dimethylphenyl)-benzofuran-2(3H)-one, 5,7-di-tert-butyl-3-(4-hydroxyphenyl)-benzofuran-2(3H)-one, 5,7-di-tert-butyl-3-{ 4-(2-hydroxyethoxy)phenyl}-benzofuran-2(3H)-one, 6-(2-(4-(5,7-di-tert-2-oxo-2,3-dihydrobenzofuran-3-yl)phenoxy)ethoxy)-6-oxohexyl-6-((6-hydroxyhexanoyl)oxy)hexanoate, and 5 -di-tert-butyl -3 -(4-((15 -hydroxy-3,6,9,13 -tetraoxapentadecyl)oxy)phenyl)benzofuran-2(3H)one.

Examples of the hindered amine compounds include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)•di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-ylamino]undecane, 1,6,11-tris[2,4-bis(N-butyl-N-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidine-4-yl)carbonate, 2,2,6,6-tetramethyl-4-piperidyl hexadecanoate, and 2,2,6,6-tetramethyl-4-piperidyl octadecanoate.

Examples of the ultraviolet absorbers include 2-hydroxybenzophenones, such as 2,4-dihydroxybenzophenone and 5,5'-methylenebis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), a polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-tert-butylphenyl-3,5-di-tert-butyl-4-hydroxybenzoate, octyl (3,5-di-tert-butyl-4-hydroxy)benzoate, dodecyl (3,5-di-tert-butyl-4-hydroxy)benzoate, tetradecyl (3,5-di-tert-butyl-4-hydroxy)benzoate, hexadecyl (3,5-di-tert-butyl-4-hydroxy)benzoate, octadecyl (3,5-di-tert-butyl-4-hydroxy)benzoate, and behenyl (3,5-di-tert-butyl-4-hydroxy)benzoate; substituted oxanilides, such as 2-ethyl-2'-ethoxyoxanilide and 2-ethoxy-4'-dodecyloxanilide; cyanoacrylates, such as ethyl-α-cyano-β,β-diphenylacrylate and methyl-2-cyano-3-methyl-3-(p-methoxyphenyl)acrylate; triazines, such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecanedioate; as well as various metal salts and metal chelates, in particular, salts and chelates of nickel and chromium.

Examples of the fatty acid metal salts include metal salts of linear or branched fatty acids having a number of carbon atoms of 12 to 30. Examples of metal ions constituting the fatty acid metal salts include sodium ions, potassium ions, lithium ions, dihydroxyaluminum ions, calcium ions, zinc ions, barium ions, magnesium ions, and hydroxyaluminum ions, among which sodium ions, potassium ions, lithium ions, and calcium ions are preferable. Examples of fatty acids constituting the fatty acid metal salts include lauric acid, myristic acid, palmitic acid, stearic acid, oleic acid, linoleic acid, linolenic acid, arachidic acid, arachidonic acid, behenic acid, lignoceric acid, cerotinic acid, montanoic acid, melissic acid, 12-hydroxystearic acid, and ricinoleic acid, among which myristic acid and stearic acid are preferable.

Examples of the flame retardants include phosphorus-based flame retardants, such as triphenyl phosphate, tricresyl phosphate, trixylenyl phosphate, cresyl diphenyl phosphate, cresyl-2,6-dixylenyl phosphate, resorcinol bis(diphenyl phosphate), (1-methylethylidene)-4,1-phenylene tetraphenyl diphosphate, 1,3-phenylene tetrakis(2,6-dimethylphenyl)phosphate, aromatic phosphate esters of trade name "ADK STAB FP-500", "ADK STAB FP-600", and "ADK STAB FP-800" manufactured by ADEKA CORPORATION, phosphonate esters, such as divinyl phenylphosphonate, diallyl phenylphosphonate, and (1-butenyl) phenylphosphonate, phosphinate esters, such as phenyl diphenylphosphinate, methyl diphenylphosphinate, and 9,10-dihydro-9-oxa-10-phosphaphenanthrene-10-oxide derivative, phosphazene compounds, such as bis(2-allylphenoxy)phosphazene and dicresyl phosphazene, melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus; metal hydroxides, such as magnesium hydroxide, aluminum hydroxide; and bromine-based flame retardants, such as brominated bisphenol A-type epoxy resins, brominated phenolic novolac-type epoxy resins, hexabromobenzene, pentabromotoluene, ethylenebis(pentabromophenyl), ethylenebis(tetrabromophthalimide), 1,2-dibromo-4-(1,2-dibromoethyl)cyclohexane, tetrabromocyclooctane, hexabromocyclododecane, bis(tribromophenoxy)ethane, brominated polyphenylene ethers, brominated polystyrene, and 2,4,6-tris(tribromophenoxy)-1,3,5-triazine, tribromophenylmaleimide, tribromophenylacrylate, tribromophenylmethacrylate, tetrabromobisphenol A-type dimethacrylate, pentabromobenzylacrylate, and brominated styrene. These flame retardants are preferably combined with anti-drip agents, such as fluorocarbon polymers, and flame retardant promoters, such as polyhydric alcohols and hydrotalcites.

Examples of the fillers can include talc, mica, calcium carbonate, calcium oxide, calcium hydroxide, magnesium carbonate, magnesium hydroxide, magnesium oxide, magnesium sulfate, aluminum hydroxide, barium sulfate, glass powders, glass fibers, clay, dolomite, silica, alumina, potassium titanate whiskers, wollastonite, and fibrous magnesium oxysulfate, which can be used with appropriate selection of the particle diameters (for fibrous fillers, fiber diameters and lengths, and aspect ratio). Among these fillers, talc is particularly preferably used because of its excellent effect of imparting rigidity and its availability. Fillers that have received surface treatment as necessary can also be used.

The hydrotalcites may be complex salt compounds including magnesium, aluminum, hydroxy groups, carbonate groups, and optional water of crystallization, and may be natural or synthesized. The crystal structures, particle shapes, and particle sizes of the hydrotalcites are not particularly limited. In the hydrotalcites, at least a part of magnesium or aluminum may be replaced with other metal, such as alkali metal or zinc, and at least a part of hydroxy groups or carbonate groups may be replaced with other anion groups. In the hydrotalcites, water of crystallization may be removed, and the surface may be covered, for example, with a fatty acid, such as stearic acid, a fatty acid metal salt, such as an alkali metal oleate salt, an organic sulfonic acid metal salt, such as a dodecylbenzenesulfonic acid alkali metal salt, or a wax.

Examples of the antistatic agents include small antistatic agents, such as with nonionic, anionic, cationic, or amphoteric surfactants, and polymer antistatic agents, such as with polymers. Examples of the nonionic surfactants include polyethylene glycol nonionic surfactants, such as higher alcohol-ethylene oxide adducts, higher alkylamine-ethylene oxide adducts, and polyolefin glycol-ethylene oxide adducts; and polyhydric alcohol nonionic surfactants, such as polyethylene oxide, alkyl ethers of polyhydric alcohols, and amides of alkanolamines and fatty acids. Examples of the anionic surfactants include carboxylate salts, such as alkali metal salts of higher fatty acids; sulfate ester salts, such as higher alcohol sulfate ester salts and higher alkyl ether sulfate ester salts, sulfonates, such as alkyl benzenesulfonates, alkyl sulfonates, and paraffin sulfonate; and phosphate ester salts, such as higher alcohol phosphate ester salts. Examples of the cationic surfactants include quaternary ammonium salts, such as alkyltrimethylammonium salt. Examples of the amphoteric surfactants include amino acid amphoteric surfactants, such as higher alkyl amino propionates, betaine amphoteric surfactants, such as higher alkyldimethylbetaines and higher alkyldihydroxyethylbetaines. Among them, anionic surfactants are preferable, and sulfonates, such as alkyl benzenesulfonate, alkyl sulfonate, and paraffin sulfonate, are particularly preferable.

Examples of the polymer antistatic agents include ionomers and block polymers including polyethylene glycol as a hydrophilic moiety. Examples of the ionomers include those described in JP2010-132927A. Examples of the polymers including polyethylene glycol as a hydrophilic moiety include polyether ester amides described in JP H07-10989A described in US6552131B1, polymers including polyolefin and polyethylene glycol, and polymers including polyester and polyethylene glycol described in JP2016-023254A.

Fluorescent whitening agents are compounds that exhibit a fluorescent effect of absorbing ultraviolet rays of sunlight or artificial light, converting them into visible light rays of violet to blue, and radiating them, thereby contributing to the whiteness and blueness of molded materials. Examples of the fluorescent whitening agents include a benzoxazole derivative C.I.Fluorescent Brightener 184; a coumarin derivative C.I.Fluorescent Brightener 52; diaminostilbene disulfonic acid derivatives C.I.Fluorescent Brightener 24, 85, and 71.

The pigments are not particularly limited, and commercially available pigments can also be used. Examples of the pigments include Pigment Reds 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Oranges 13, 31, 34, 36, 38, 43, 46, 48, 49, 51, 52, 55, 59, 60, 61, 62, 64, 65, and 71; Pigment Yellows 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; Pigment Greens 7, 10, and 36; Pigment Blues 15, 15:1, 15:2, 15:3, 15:4, 15:5, 15:6, 22, 24, 29, 56, 60, 61, 62, and 64; Pigment Violets 1, 15, 19, 23, 27, 29, 30, 32, 37, 40, and 50.

Examples of the dyes include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes.

Methods of producing the crystallization inhibitor for polyolefin resins of the present embodiment are not particularly limited, and examples of them include a method in which a nucleating agent for polyolefin resins (A), a lubricant (B), and optionally other additives are added to and then mixed using a mixer, such as an FM mixer, a mill roll, a Banbury mixer, or Supermixer.

To the crystallization inhibitor for polyolefin resins of the present embodiment, granulating aids, such as binders, waxes, solvents, and silica, may be further added, which may be granulated one-pack multi-additives. The crystallization inhibitor for polyolefin resins of the present embodiment may be a masterbatch further including thermoplastic resins.

Examples of the thermoplastic resins contained in the masterbatch include polyolefin resins, polyamide resins, polyester resins, acrylic resins, urethane resins, styrene resins, polycarbonate resins, and polyacetal resins. Examples of the polyolefin resins herein include polyethylene resins, such as low density polyethylenes, linear low density polyethylenes, high density polyethylenes, bridged polyethylenes, and ultra high molecular weight polyethylenes, polypropylene resins, such as homopolypropylene, random copolymer polypropylenes, block copolymer polypropylenes, impact copolymer polypropylenes, high impact copolymer polypropylenes, and maleic anhydride-modified polypropylenes, α-olefin polymers, such as polybutene-1, cycloolefin polymer, poly-3-methyl-1-butene, poly-3-methyl-1-pentene, and poly-4-methyl-1-pentene, and α-olefin copolymers, such as ethylene-methyl methacrylate copolymers and ethylene-vinyl acetate copolymers. One of the polyolefin resins may be used alone, or two or more of them may be used in combination. The polyolefin resins may also be made into an alloy. There are no particular limitations in the polyolefin resins, for example, on the molecular weights, degrees of polymerization, densities, softening points, ratio of solvent-insoluble matters, degree of stereoregularity, presence of catalyst residues, types and mixture ratio of the monomers as raw materials, and types of the catalysts used in polymerization (e.g., Ziegler catalysts, metallocene catalysts, and the like), and they are selected as appropriate.

The amount of the thermoplastic resins contained in the masterbatch may be, for example, 90% by mass or less, and is preferably 80% by mass or less, and more preferably 60% by mass or less. In addition, the amount of the thermoplastic resins contained in the masterbatch may be, for example, 10% by mass or more.

Next, the polyolefin resin composition of the present embodiment will be described.

### <Polyolefin Resin Composition>

The polyolefin resin composition of the present embodiment includes a polyolefin resin, a nucleating agent for polyolefin resins (A), and a lubricant (B). In addition, the amount of the nucleating agent for polyolefin resins (A) contained with respect to 100 parts by mass of the polyolefin resin is from 0.005 parts by mass to 0.1 parts by mass.

In the polyolefin resin composition of the present embodiment, the crystallization of the polyolefin resin is sufficiently inhibited.

Examples of the polyolefin resins include the same as those illustrated as the polyolefin resins that may be contained in the masterbatch as described above. In the polyolefin resin composition of the present embodiment, the polyolefin resins particularly preferably include polypropylene resins from the viewpoint of better heat resistance.

The polyolefin resins may include polyolefin thermoplastic elastomers. In this case, a molded article composed of the polyolefin resin composition has good impact resistance.

The polyolefin resin composition of the present embodiment may further include other elastomers than the polyolefin thermoplastic elastomers. In this case, a molded article composed of the polyolefin resin composition has even better impact resistance. Examples of the other elastomers than the polyolefin thermoplastic elastomers herein include thermoplastic elastomers, such as polystyrene thermoplastic elastomers, polyvinyl chloride thermoplastic elastomers, polyurethane thermoplastic elastomers, polyester thermoplastic elastomers, and polyamide thermoplastic elastomer; and synthetic rubbers, such as isoprene rubbers, butadiene rubbers, acrylonitrile-butadiene copolymer rubbers, styrene-butadiene copolymer rubbers, fluororubbers, and silicone rubbers. Among them, the thermoplastic elastomers are preferable from the viewpoint of even better processability of the polyolefin resin composition and further weight reduction of the molded article made of the polyolefin resin composition.

In the polyolefin resin composition of the present embodiment, the total of the amount of the polyolefin thermoplastic elastomers and the amount of the other elastomers than the polyolefin thermoplastic elastomers may be 50% by mass or less relative to the total resin components, and is preferably 30% by mass or less, and more preferably 25% by mass or less. In addition, the total of the amount of the polyolefin thermoplastic elastomers and the amount of the other elastomers than the polyolefin thermoplastic elastomers may be, for example, 5% by mass or more relative to the total resin components.

Examples of the nucleating agent for polyolefin resins (A) contained in the polyolefin resin composition of the present embodiment include the same as those contained in the crystallization inhibitor for polyolefin resins as described above. As described above, the amount of the nucleating agent for polyolefin resins (A) contained with respect to 100 parts by mass of the polyolefin resins is from 0.005 parts by mass to 0.1 parts by mass. The amount of the nucleating agent is more preferably from 0.01 parts by mass to 0.08 parts by mass, and still more preferably from 0.02 parts by mass to 0.075 parts by mass.

Examples of the lubricant (B) contained in the polyolefin resin composition of the present embodiment include the same as those contained in the crystallization inhibitor for polyolefin resins as described above. The amount of the lubricant (B) contained with respect to 100 parts by mass of the polyolefin resins may be, for example, from 0.001 parts by mass to 10 parts by mass, and is preferably from 0.005 parts by mass to 1 part by mass, more preferably from 0.01 parts by mass to 0.5 parts by mass, still more preferably from 0.01 parts by mass to 0.2 parts by mass, and still more preferably from 0.025 parts by mass to 0.15 parts by mass. Furthermore, the amount of the lubricant (B) contained with respect to 100 parts by mass of the nucleating agent for polyolefin resins (A) may be, for example, from 10 to 1000 parts by mass, and is preferably from 15 to 600 parts by mass, more preferably from 25 to 400 parts by mass, still more preferably from 30 to 300 parts by mass, and still more preferably from 50 to 300 parts by mass.

In the polyolefin resin composition of the present embodiment, the nucleating agent for polyolefin resins (A) may include an acetal compound (A-1) represented by general formula (1), and the lubricant (B) may include at least one selected from the group consisting of a fatty acid ester (B-1) and a fatty acid amide (B-2).

The polyolefin resin composition of the present embodiment may further include other additives, as necessary, illustrated as those contained in the crystallization inhibitor for polyolefin resins as described above.

Next, the method of producing a polyolefin resin composition of the present embodiment will be described.

### <Method of Producing Polyolefin Resin Composition>

The method of producing a polyolefin resin composition of the present embodiment includes a blending step in which a nucleating agent for polyolefin resins (A) and a lubricant (B) are added to a polyolefin resin. Furthermore, in the blending step, the amount of the nucleating agent for polyolefin resins (A) added with respect to 100 parts by mass of the polyolefin resin is from 0.005 parts by mass to 0.1 parts by mass.

According to the method of producing a polyolefin resin composition of the present embodiment, a polyolefin resin composition with sufficiently inhibited crystallization of the polyolefin resin can be produced.

The method of producing a polyolefin resin composition of the present embodiment may include other steps than the blending step. The other steps can include, for example, a preparation step and a melt kneading step.

### (Preparation Step)

First, a polyolefin resin, a nucleating agent for polyolefin resins (A), and a lubricant (B) are prepared.

### (Blending Step)

Next, the nucleating agent for polyolefin resins (A) and the lubricant (B) are added to the polyolefin resin. The method of blending is not particularly limited, and examples include a method in which a crystallization inhibitor for polyolefin resins, and optionally other additives are added to a polyolefin resin, and then mixed using a mixer, such as an FM mixer, a mill roll, a Banbury mixer, or Supermixer. Here, the nucleating agent for polyolefin resins (A) and the lubricant (B) may be added as a crystallization inhibitor for polyolefin resins as described above. The method of blending may be one in which at least one component of a nucleating agent for polyolefin resins (A), a lubricant (B), and optionally other additives is(are) added to a polyolefin resin monomer or a polyolefin resin oligomer before or during polymerization for a polymerization reaction, then the remaining component(s) is(are) be added to the obtained polymer.

A polyolefin resin composition is thus produced. The method of producing a polyolefin resin composition may be one including a melt kneading step in which the mixture obtained in the blending step is further melt kneaded using melt kneading machine, such as a single screw extruder or a twin screw extruder. Here, the temperature in the melt kneading step may be, for example, from 180 to 280°C. Further, the method of producing a polyolefin resin composition may be one including a granulation step in which the kneaded product obtained in the melt kneading step is granulated. Here, the granulation method is not particularly limited, and examples include methods using a granulator such as a pelletizer. The shape of the polyolefin resin composition obtained by granulation is not particularly limited, and may be, for example, in a pellet form.

Next, the molded article of the present embodiment will be described.

### <Molded Article>

The molded article of the present embodiment is obtained by molding the polyolefin resin composition described above.

Examples of the molded article of the present embodiment include injection-molded articles, fibers, flat yarns, biaxially oriented films, uniaxially oriented films, non-oriented films, sheets, thermoforming molded articles, extrusion blow molded articles, injection blow molded articles, injection stretch blow molded articles, contour extrusion molded articles, and rotational molded articles. As the molded article of the present embodiment, a molded article is particularly preferred in which crystallization of the polyolefin resin is required to be sufficiently inhibited when the molded article is produced. Specific examples of such a molded article include laminated bodies including synthetic fibers, films, or resins laminated to a substrate, for example, made of a woody or fibrous material.

The method of producing the molded article of the present embodiment is not particularly limited, and examples include molding methods such as injection molding methods, extrusion molding methods, blow molding methods, rotational molding methods, vacuum molding methods, inflation molding methods, calendar molding methods, slush molding methods, dip molding methods, and foam molding methods. Among them, particularly preferred molding methods are extrusion molding methods and calendar molding methods.

Next, the method of inhibiting crystallization of polyolefin resins of the present embodiment will be described.

### <Method of Inhibiting Crystallization of Polyolefin Resins>

The method of inhibiting crystallization of polyolefin resins of the present embodiment is one in which a nucleating agent for polyolefin resins (A) and a lubricant (B) are added to a polyolefin resin.

According to the method of inhibiting crystallization of polyolefin resins of the present embodiment, crystallization of polyolefin resins can be sufficiently inhibited.

### EXAMPLES

The present invention will be described in more detail with reference to Examples, but is not limited to them.

### <Preparation of Resin Composition>

### (Examples 1 to 13 and Comparative Example 1)

To 100 parts by mass of a polyolefin resin (homopolypropylene having a melt flow rate of 7.7 g/10 min at a cylinder temperature of 230°C and a load of 2.16 kg), 0.05 parts by mass of tetrakis[methylene-3-(3',5'-di-tert-butyl-4'-hydroxyphenyl)propionate]methane as a phenolic antioxidant, 0.1 parts by mass of tris(2,4-di-tert-butylphenyl)phosphite as a phosphorus-based antioxidant, 0.05 parts by mass of calcium stearate as a fatty acid metal salt, and in blending amounts shown in Tables 1 and 2 of a nucleating agent for polyolefin resins (A) and a lubricant (B) shown in Tables 1 and 2 were added, mixed using a Henschel mixer, then melt kneaded using a twin screw extruder (Labo Plastomill Micro, manufactured by Toyo Seiki Seisaku-sho, Ltd.) at an extrusion temperature of 230°C, and granulated to obtain resin composition pellets of Examples 1 to 13 and Comparative Example 1. The unit of the blending amount of each component in Tables 1 and 2 is in mass parts. The nucleating agents for polyolefin resins (A) and lubricants (B) described in Tables 1 and 2 are shown below.

### Nucleating agents for polyolefin resins (A):

- Compound No. 1 (A-1a)
- Compound No. 2 (A-1b)
- Compound No. 5 (A-2a)
- Compound No. 8 (A-2b)
- Compound No. 11 (A-3a)

### Lubricants (B):

- glycerol monostearate (B-1)
- oleic acid amide (B-2a)
- ethylene bisstearamide (B-2b)

### <Characterization>

The obtained resin composition pellets of Examples 1 to 13 and Comparative Example 1 were melt compressed using a 50-t press machine at 230°C and 15MPa for 3 minutes to obtain square sheets having a side length of 10 cm and a thickness of 1.0 mm. Disk test pieces with a diameter of 25 mm were cut out from the obtained sheets. The crystallization temperatures of the test pieces were measured by the following procedure.

First, a test piece was placed on a rotational rheometer (DHR2 manufactured by TA Instruments) including a parallel plate with a diameter of 25 mm. After heating the test piece at 230°C for 1 minute under a nitrogen atmosphere, the distance between the plates was set to 0.9 mm, and excess resin was removed. Thereafter, a test piece was heated at 230°C for another 15 minutes, dynamic viscoelasticity measurements were performed every 10 seconds from the start of the measurement under the conditions of the rheometer set as: strain of 1%, angular velocity of 1 rad/s, starting temperature of 230°C, and cooling temperature rate of 5°C/min. Then, the complex viscosity η^{∗} (Pa s) and sample temperature (°C) at each point of measurement were plotted. FIG. 1 shows a graph plotting η^{∗} (Pa s) and the sample temperature (°C) for the resin composition of Example 1. Here, the vertical axis in FIG. 1 is in a common logarithmic scale.

In the graph plotting η^{∗} (Pa s) and sample temperature (°C), the measurement points in the region where the sample temperature is below 140°C and η^{∗} is from 10³ to 10⁶ Pa s are designated as A1, A2, A3... in order of time from the start of measurement. When the straight line passing through Aᵢ and Aᵢ₊₁ is designated as straight line Li, the one with the largest absolute value of slope among straight lines L₁, L₂ ... is designated as straight line L₁. On the other hand, the straight line passing through the measurement point 18 minutes after the start of measurement (corresponding to the set temperature of 140°C of the rheometer) and the measurement point 20 minutes after the start of measurement (corresponding to the set temperature of 130°C of the rheometer) is designated as straight line L₂. The temperature corresponding to the intersection point P of straight lines L1 and L2 was considered as the crystallization temperature (°C). The crystallization temperatures (°C), as determined by the method described above for the resin composition of Examples 1 to 13 and Comparative Example 1, were determined. The results are shown in Tables 1 and 2 side by side.

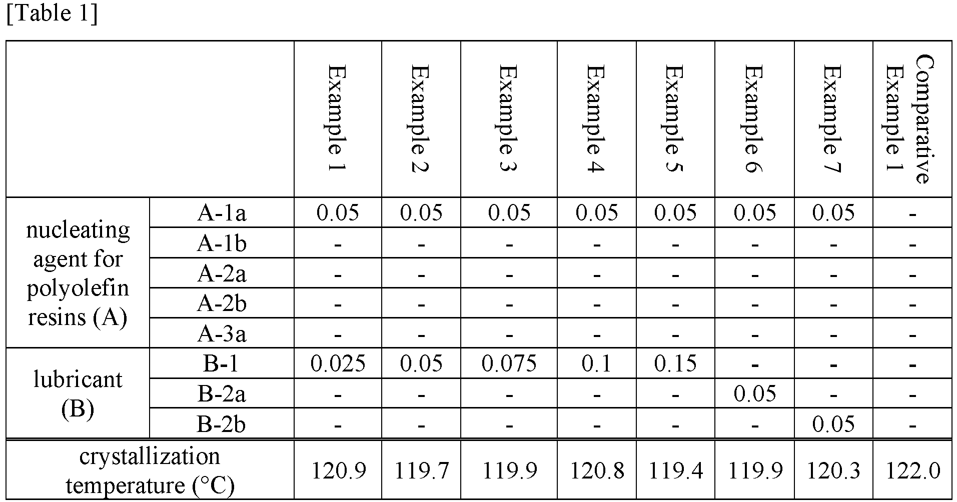

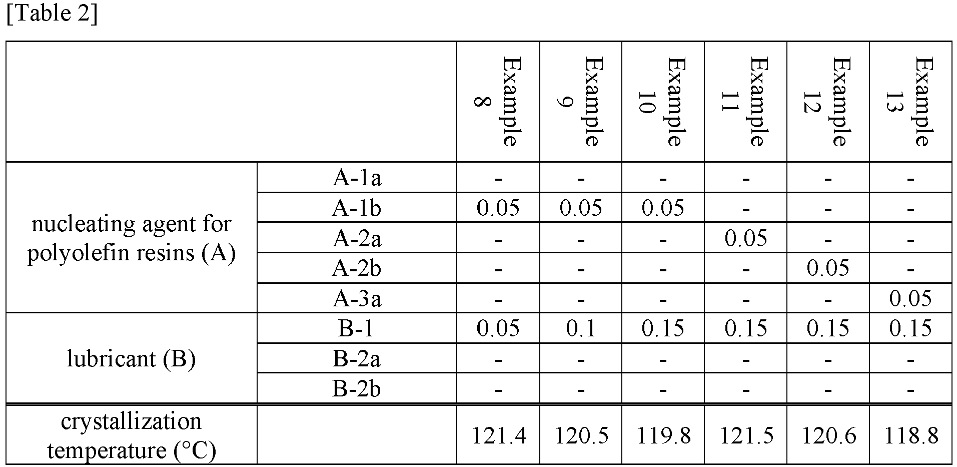

From the results shown in Tables 1 and 2, the resin compositions of Examples 1 to 13 exhibited lower crystallization temperatures than the resin composition of Comparative Example 1, and crystallization of the polyolefin resins was sufficiently inhibited.

From the above, it was confirmed that the crystallization inhibitor for polyolefin resins of the present invention enables crystallization of polyolefin resins to be sufficiently inhibited.

## Claims

1. A crystallization inhibitor for polyolefin resins, comprising:
a nucleating agent for polyolefin resins (A); and
a lubricant (B).

2. The crystallization inhibitor for polyolefin resins of claim 1,
wherein the nucleating agent for polyolefin resins (A) contains an acetal compound (A-1) represented by general formula (1), and
wherein the lubricant (B) contains at least one selected from the group consisting of a fatty acid ester (B-1) and a fatty acid amide (B-2), 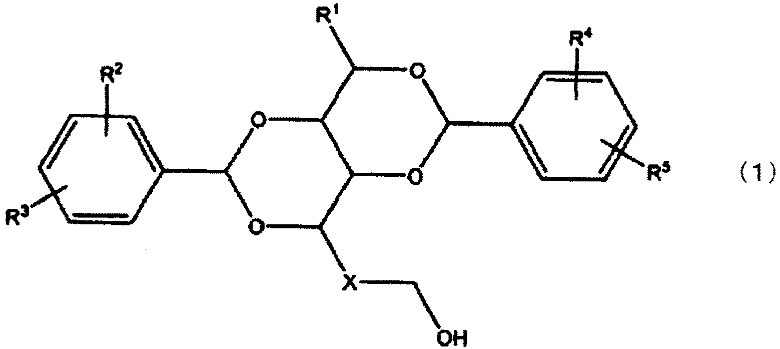
where R¹ represents a hydrogen atom or a C₁-C₄ alkyl group; R², R³, R⁴, and R⁵ each independently represent a hydrogen atom, a halogen atom, a cyano group, a C₁-C₄ alkyl group, or a C₁-C₄ alkoxy group, or a C₃-C₆ alkylene group or a C₁-C₄ alkylenedioxy group when R² and R³ or R⁴ and R⁵ are linked to each other; and X represents a single bond, a - CH(OH)- group, or a -CH(OH)CH(OH)- group.

3. The crystallization inhibitor for polyolefin resins of claim 2, wherein the fatty acid ester (B-1) contains a glycerol fatty acid monoester.

4. The crystallization inhibitor for polyolefin resins of claim 2 or 3, wherein the fatty acid amide (B-2) contains at least one selected from the group consisting of fatty acid monoamide and alkylene bisfatty acid amide.

5. A polyolefin resin composition, comprising:
a polyolefin resin;
a nucleating agent for polyolefin resins (A); and
a lubricant (B),
wherein the content of the nucleating agent for polyolefin resins (A) with respect to 100 parts by mass of the polyolefin resin is from 0.005 parts by mass to 0.1 parts by mass.

6. The polyolefin resin composition of claim 5,
wherein the nucleating agent for polyolefin resins (A) contains an acetal compound (A-1) represented by general formula (1), and
wherein the lubricant (B) contains at least one selected from the group consisting of a fatty acid ester (B-1) and a fatty acid amide (B-2), 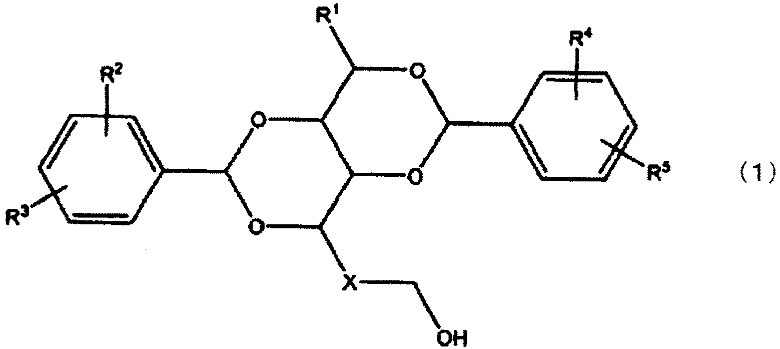
where R¹ represents a hydrogen atom or a C₁-C₄ alkyl group; R², R³, R⁴, and R⁵ each independently represent a hydrogen atom, a halogen atom, a cyano group, a C₁-C₄ alkyl group, or a C₁-C₄ alkoxy group, or a C₃-C₆ alkylene group or a C₁-C₄ alkylenedioxy group when R² and R³ or R⁴ and R⁵ are linked to each other; and X represents a single bond, a - CH(OH)- group, or a -CH(OH)CH(OH)- group.

7. A molded article, obtained by molding the polyolefin resin composition of claim 5 or 6.

8. A method of producing a polyolefin resin composition, comprising
a blending step of blending a nucleating agent for polyolefin resins (A) and a lubricant (B) with a polyolefin resin,
wherein, in the blending step, the content of the nucleating agent for polyolefin resins (A) with respect to 100 parts by mass of the polyolefin resin is from0.005 parts by mass to 0.1 parts by mass.

9. A method of inhibiting crystallization of polyolefin resins, comprising
blending a nucleating agent for polyolefin resins (A) and a lubricant (B) with a polyolefin resin.
